# FASCICULE DE BREVET EUROPEEN

(11) **EP 4 353 962 B1**
(45) Date de publication et mention de la délivrance du brevet: **04.02.2026**
(21) Numéro de dépôt: 23201388.8
(22) Date de dépôt: 03.10.2023
(51) Int. Cl.: F02K 1/64

(54) **ENSEMBLE DE PROPULSION D'AÉRONEF ÉQUIPÉ D'UN DISPOSITIF D'INVERSION DE POUSSÉE COMPORTANT AU MOINS UNE BARRIÈRE GONFLABLE, AÉRONEF COMPORTANT AU MOINS UN TEL ENSEMBLE DE PROPULSION**
FLUGZEUGANTRIEBSANORDNUNG MIT EINER SCHUBUMKEHRVORRICHTUNG MIT MINDESTENS EINER AUFBLASBAREN BARRIERE, FLUGZEUG MIT MINDESTENS EINER SOLCHEN ANTRIEBSANORDNUNG
AIRCRAFT PROPULSION ASSEMBLY PROVIDED WITH A THRUST REVERSER DEVICE COMPRISING AT LEAST ONE INFLATABLE BARRIER, AIRCRAFT COMPRISING AT LEAST ONE SUCH PROPULSION ASSEMBLY

(30) Priorité: 13.10.2022 FR 2210561
(43) Date de publication de la demande: 17.04.2024
(73) Titulaire: AIRBUS OPERATIONS (S.A.S.), 31060 Toulouse (FR)
(72) Inventeur: CZAPLA, Lionel, 31060 TOULOUSE (FR); THUBERT, Benjamin, 31060 TOULOUSE (FR)
(74) Mandataire: Fantin, Laurent

(56) Documents cités:
- FR-A1- 3 077 847
- GB-A- 965 992
- US-A- 3 599 432
- US-A1- 2019 032 601
- US-A1- 2022 243 681

## Description

La présente demande se rapporte à un ensemble de propulsion d'aéronef équipé d'un dispositif d'inversion de poussée comportant au moins une barrière gonflable ainsi qu'à un aéronef comportant au moins un tel ensemble de propulsion.

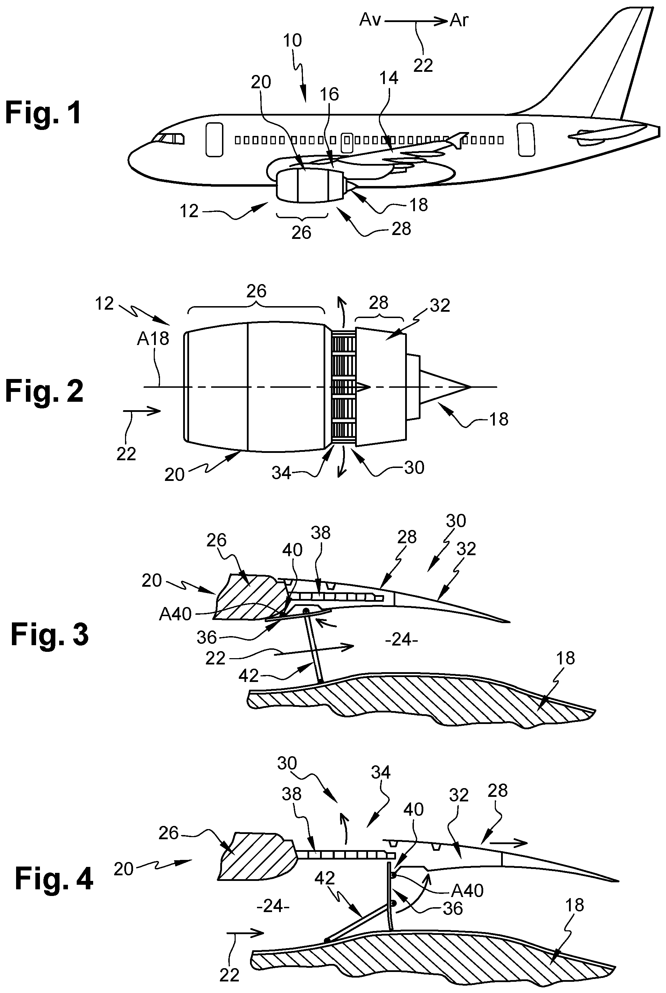

Selon un mode de réalisation visible sur les figures 1 à 4, un aéronef 10 comprend plusieurs ensembles de propulsion 12 positionnés sous chacune des ailes 14 de l'aéronef 10 et reliés à ces dernières par des mâts 16. Chaque ensemble de propulsion 12 comprend un turboréacteur 18 positionné à l'intérieur d'une nacelle 20.

Pour la suite de la description, une direction longitudinale est parallèle à l'axe de rotation A18 du turboréacteur 18 et une direction radiale est perpendiculaire à l'axe de rotation A18. Un plan transversal est un plan perpendiculaire à l'axe de rotation A18. Les notions avant/arrière, notées Av/Ar ou amont/aval, font référence au sens d'écoulement d'un flux d'air 22 dans la nacelle 20, ce dernier, représenté sur la figure 1 par une flèche, s'écoulant de l'avant (Av) vers l'arrière (Ar).

La nacelle 20 a une forme approximativement tubulaire et délimite avec le turboréacteur 18 un conduit annulaire 24. Elle comprend, de l'avant vers l'arrière, une partie avant 26 via laquelle pénètre le flux d'air 22 et une partie arrière 28 via laquelle sort le flux d'air 22.

La nacelle 20 comprend un dispositif d'inversion de poussée 30 configuré pour occuper un état activé (visible sur les figures 2 et 4) dans lequel il dévie au moins une partie du flux d'air 22 circulant dans le conduit annulaire 24 vers l'extérieur et l'avant de la nacelle 20 ainsi qu'un état inactivé (visible sur les figures 1 et 3) dans lequel il ne dévie pas le flux d'air 22 circulant dans le conduit annulaire 24.

Le dispositif d'inversion de poussée 30 comprend au moins une partie mobile 32 permettant de générer au moins une ouverture latérale 34 (visible sur les figures 2 et 4) vers laquelle est orienté le flux d'air dévié.

Selon un mode de réalisation, la partie mobile 32 correspond à la partie arrière 28 de la nacelle 20, qui se translate selon la direction longitudinale entre une position amont dans laquelle la partie arrière 28 est en contact avec la partie avant 26 lorsque le dispositif d'inversion de poussée 30 est à l'état inactivé et une position aval (visible sur les figures 2 et 4) dans laquelle la partie arrière 28 est écartée de la partie avant 26 de manière à générer des ouvertures latérales 34 lorsque le dispositif d'inversion de poussée 30 est à l'état activé.

Le dispositif d'inversion de poussée 30 comprend également des portes 36 rigides configurées pour dévier au moins une partie du flux d'air 22 circulant dans le conduit annulaire 24 en direction d'une ouverture latérale 34 ainsi que des cascades 38 positionnées au niveau des ouvertures latérales 34. Ces cascades 38 sont configurées pour contrôler l'orientation du flux dévié par les portes 36.

Chaque porte 36 est mobile entre une position repliée, visible sur la figure 3, lorsque le dispositif d'inversion de poussée 30 est à l'état inactivé, dans laquelle la porte 36 n'est pas en saillie dans le conduit annulaire 24 ainsi qu'une position déployée, visible sur la figure 4, lorsque le dispositif d'inversion de poussée 30 est à l'état activé, dans laquelle la porte 36 s'étend en travers du conduit annulaire 24 pour dévier au moins une partie du flux d'air 22 y circulant en direction des ouvertures latérales 34.

Selon une configuration, chaque porte 36 est reliée à la partie mobile 32 par une articulation 40 comportant un axe de rotation A40 sensiblement perpendiculaire à l'axe de rotation A18 et à une direction radiale.

En complément, le dispositif d'inversion de poussée 30 comprend, pour chaque porte 36, au moins une bielle 42, reliant la porte 36 et le turboréacteur 18, qui permet de faire pivoter la porte 36 de la position repliée à la position déployée et inversement lors de la translation de la partie arrière 28.

Les portes 36, leurs articulations 40 et les bielles 42 sont métalliques ou en matériau composite et dimensionnées pour résister aux efforts générés par le flux d'air 22 lorsque le dispositif d'inversion de poussée est à l'état activé. Par conséquent, elles ont une masse non négligeable qui impacte la consommation énergétique de l'aéronef.

Le document US3599432 décrit un dispositif d'inversion de poussée d'un aéronef qui comprend une barrière gonflable configurée pour dévier, à l'état gonflé, un flux d'air en direction d'une ouverture latérale d'une nacelle. Cette solution n'est pas adaptée lorsque le conduit annulaire présente une section importante.

La présente invention vise à remédier à tout ou partie des inconvénients de l'art antérieur. A cet effet, l'invention a pour objet un ensemble de propulsion d'aéronef comprenant une motorisation, une nacelle entourant la motorisation, un conduit annulaire entre la motorisation et la nacelle dans lequel circule en fonctionnement un flux d'air d'amont en aval ainsi qu'un dispositif d'inversion de poussée comportant au moins une ouverture latérale traversant la nacelle, configurée pour occuper un état ouvert ou un état fermé, et au moins une barrière configurée pour occuper une position repliée dans laquelle la barrière n'est pas en saillie dans le conduit annulaire et une position déployée dans laquelle la barrière s'étend en travers du conduit annulaire pour dévier au moins une partie du flux d'air circulant dans le conduit annulaire en direction de l'ouverture latérale, la barrière présentant un premier bord solidaire de la nacelle ainsi qu'un deuxième bord distant du premier bord et configuré pour être en contact avec la motorisation en position déployée.

Selon l'invention, au moins une barrière est gonflable et configurée pour occuper un état dégonflé, en position repliée, dans lequel la barrière est souple et un état gonflé, en position déployée, dans lequel la barrière est sensiblement rigide ou semi-rigide. En complément, le dispositif d'inversion de poussée comprend au moins un système d'alimentation configuré pour alimenter en fluide la barrière gonflable.

Cette solution permet de réduire la masse embarquée car les barrières gonflables sont plus légères que les portes de l'art antérieur et ne nécessitent ni articulation ni bielle pour provoquer leur déploiement.

Le dispositif d'inversion de poussée comprend au moins un système de maintien configuré pour maintenir la barrière gonflable en position déployée, le système de maintien comportant au moins un lien souple présentant une première extrémité reliée à la nacelle et une deuxième extrémité reliée au deuxième bord de la barrière gonflable. Selon une autre caractéristique, la nacelle comprend une partie avant et une partie arrière mobile entre une position amont dans laquelle la partie arrière est en contact avec la partie avant ainsi qu'une position aval dans laquelle la partie arrière est espacée de la partie avant, l'ouverture latérale étant située entre les parties avant et arrière. En complément, le lien souple étant relié à un point d'attache de la partie arrière, le système de maintien comprend au moins une poulie reliée à une structure fixe de la nacelle et configurée pour guider le lien souple, la poulie et le point d'attache étant agencés de manière à ce que le point d'attache soit décalé vers l'amont par rapport à la poulie lorsque la partie arrière est en position amont et durant une partie d'un mouvement de la partie arrière de la position amont vers la position aval.

Selon une autre caractéristique, le système de maintien comprend des première et deuxième poulies reliées à la structure fixe de la nacelle, la deuxième poulie étant décalée vers l'amont par rapport à la première poulie, le lien souple défilant, à partir de sa première extrémité, sur la première poulie puis sur la deuxième poulie. En complément, les première et deuxième poulies et le point d'attache sont agencés de manière à ce que le point d'attache soit positionné au droit ou à proximité de la deuxième poulie lorsque la partie arrière est en position amont et au droit ou à proximité de la première poulie lorsque la partie arrière est en position aval.

Selon une autre caractéristique, le système d'alimentation comprend un système de prélèvement d'air au niveau de la motorisation.

Selon une autre caractéristique, le système d'alimentation comprend :
- un conduit principal dans lequel circule d'amont en aval un fluide prévu pour gonfler la barrière gonflable, le conduit principal comportant une réduction de section,
- un premier conduit secondaire présentant une première extrémité débouchant dans le conduit principal en amont de la réduction de section, une deuxième extrémité reliée à la barrière gonflable ainsi qu'une première vanne configurée pour occuper un état passant dans lequel la première vanne autorise un flux à circuler de la première extrémité vers la deuxième extrémité et un état bloqué dans lequel la première vanne empêche tout flux entre les première et deuxième extrémités,
- un deuxième conduit secondaire présentant une première extrémité débouchant dans le conduit principal au droit de la réduction de section, une deuxième extrémité reliée à la barrière gonflable ainsi qu'une deuxième vanne configurée pour occuper un état passant dans lequel la deuxième vanne autorise un flux à circuler de la deuxième extrémité vers la première extrémité et un état bloqué dans lequel la deuxième vanne empêche tout flux entre les première et deuxième extrémités.

Selon une autre caractéristique, le système d'alimentation comprend une chambre contenant un fluide prévu pour gonfler la barrière gonflable et communiquant avec la barrière gonflable ainsi qu'un piston configuré pour modifier le volume de la chambre.

Selon une autre caractéristique, la nacelle comprend une partie avant et une partie arrière mobile entre une position amont dans laquelle la partie arrière est en contact avec la partie avant ainsi qu'une position aval dans laquelle la partie arrière est espacée de la partie avant. En complément, l'ouverture latérale étant située entre les parties avant et arrière, la partie arrière comprend au moins un logement ouvert en direction de la partie avant et configuré pour loger au moins partiellement la barrière gonflable à l'état dégonflé.

Selon une autre caractéristique, le dispositif d'inversion de poussée comprend au moins un passage permettant de faire communiquer le logement et le conduit annulaire lorsque la partie arrière est dans la position amont ainsi que, pour chaque passage, au moins une trappe mobile entre une position fermée dans laquelle la trappe obture le passage et une position ouverte dans laquelle la trappe dégage le passage.

Selon une autre caractéristique, le dispositif d'inversion de poussée comprend, pour chaque trappe, une extension solidaire de la trappe ainsi qu'au moins une butée fixe solidaire de la structure fixe de la nacelle, l'extension et la butée fixe étant agencées de sorte que la trappe bascule automatiquement en position fermée lors d'un mouvement de la partie arrière de la position aval vers la position amont.

Selon une autre caractéristique, la barrière gonflable comprend au moins un renfort au moins au niveau du deuxième bord.

Selon une autre caractéristique, la barrière gonflable comprend au moins un orifice la traversant et permettant de faire communiquer, lorsque la barrière gonflable est à l'état gonflé, une zone du conduit annulaire située en amont de la barrière gonflable et une zone du conduit annulaire située en aval.

Selon différents modes de réalisation, la barrière gonflable comprend :
- au moins une zone non gonflable encadrée par une zone gonflable ;
- au moins une première zone gonflable en forme de plaque gonflable encadrée par une deuxième zone gonflable en forme de boudin gonflable ;
- une unique zone gonflable qui s'étend sur toute la superficie de la barrière gonflable.

L'invention a également pour objet un aéronef comprenant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue latérale d'un ensemble de propulsion équipé d'un dispositif d'inversion de poussée à l'état activé illustrant un mode de réalisation de l'art antérieur,
- La figure 3 est une coupe longitudinale d'un dispositif d'inversion de poussée à l'état inactivé illustrant un mode de réalisation de l'art antérieur,
- La figure 4 est une coupe longitudinale du dispositif d'inversion de poussée visible sur la figure 3 à l'état activé,
- La figure 5 est une coupe longitudinale d'un dispositif d'inversion de poussée à l'état inactivé illustrant un mode de réalisation de l'invention,
- La figure 6 est une coupe longitudinale du dispositif d'inversion de poussée visible sur la figure 5 en cours d'activation,
- La figure 7 est une coupe longitudinale du dispositif d'inversion de poussée visible sur la figure 5 à l'état activé,
- La figure 8 est une coupe longitudinale d'un dispositif d'inversion de poussée à l'état inactivé illustrant un autre mode de réalisation de l'invention,
- La figure 9 est une coupe longitudinale du dispositif d'inversion de poussée visible sur la figure 9 à l'état activé,
- La figure 10 représente des vues en perspectives d'une partie d'un système d'alimentation lors d'une opération de gonflage (A), en l'absence d'opération de gonflage ou de dégonflage (B) et lors d'une opération de dégonflage (C),
- La figure 11 est une vue de face d'un dispositif d'inversion de poussée à l'état activé illustrant un mode de réalisation de l'invention,
- La figure 12 est une coupe selon la ligne XII-XII de la figure 11,
- La figure 13 est une vue de face d'un dispositif d'inversion de poussée à l'état activé illustrant un autre mode de réalisation de l'invention,
- La figure 14 est une coupe selon la ligne XIV-XIV de la figure 13,
- La figure 15 est une vue de face d'un dispositif d'inversion de poussée à l'état activé illustrant un autre mode de réalisation de l'invention,
- La figure 16 est une coupe selon la ligne XVI-XVI de la figure 15,
- La figure 17 est une vue en perspective d'un dispositif d'inversion de poussée à l'état activé illustrant un mode de réalisation de l'invention.

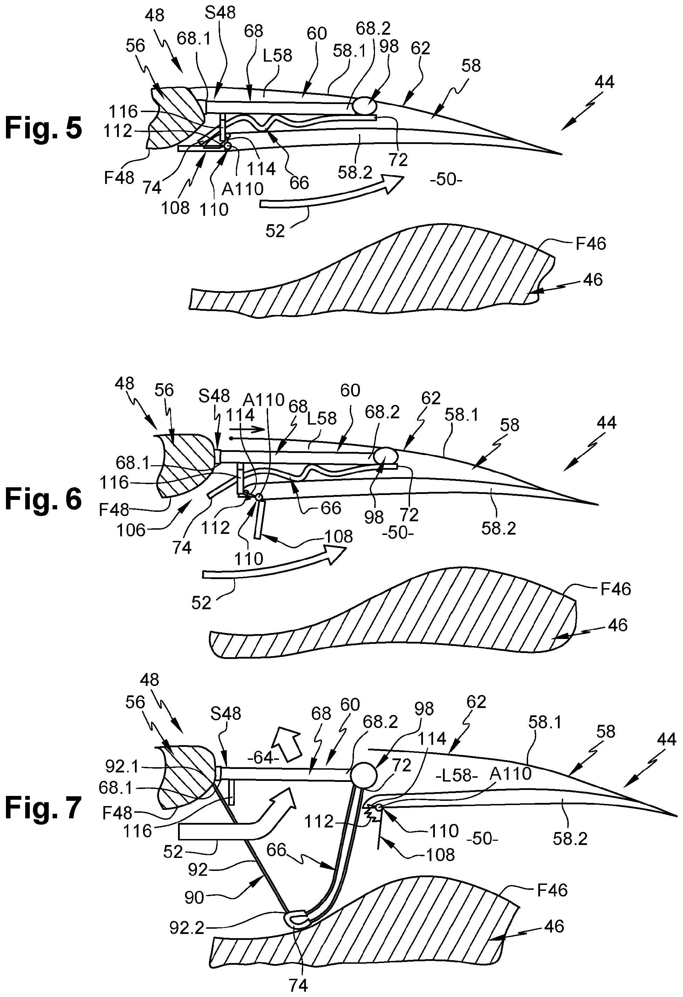

Selon un mode de réalisation visible sur les figures 5 à 7, un ensemble de propulsion 44 d'un aéronef comprend une motorisation 46, comme un turboréacteur, présentant une surface extérieure F46, une nacelle 48 entourant la motorisation 46 et présentant une surface intérieure F48 distante de la surface extérieure F46 de la motorisation 46 ainsi qu'un conduit annulaire 50, délimité par la motorisation 46 (plus particulièrement sa surface extérieure F46) et la nacelle 48 (plus particulièrement sa surface intérieure F48), qui s'étend entre une entrée et une sortie et dans lequel circule un flux d'air 52 en fonctionnement.

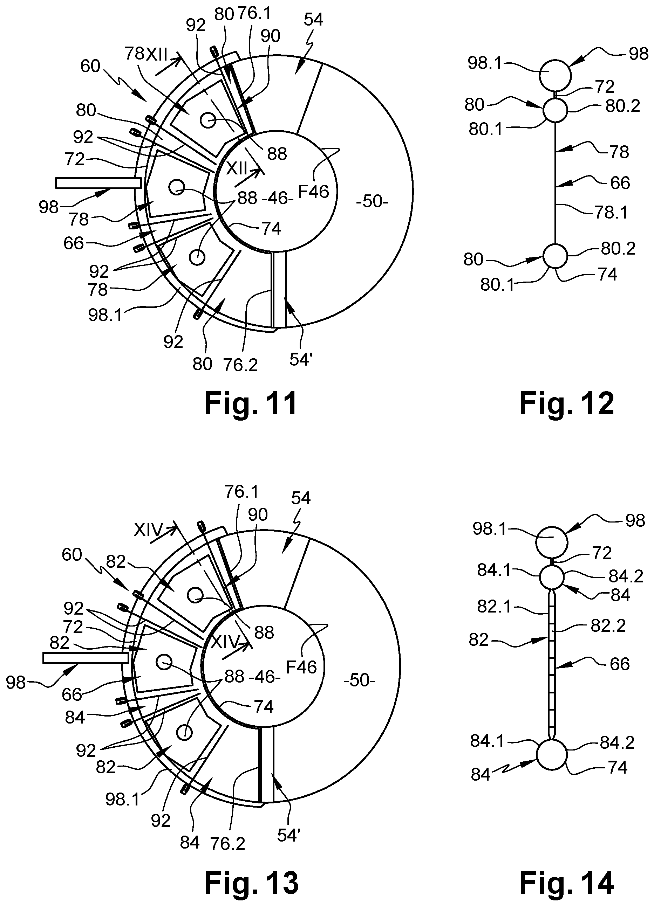

Selon un agencement visible sur les figures 11, 13, 15, l'ensemble de propulsion 44 comprend au moins une bifurcation 54, reliant la motorisation 46 et la nacelle 48, qui s'étend dans le conduit annulaire 50. Selon une configuration, l'ensemble de propulsion 44 comprend une bifurcation supérieure 54, positionnée à 12h dans le conduit annulaire 50, ainsi qu'une bifurcation inférieure 54' positionnée à 6h dans le conduit annulaire 50.

La nacelle 48 comprend, de l'avant vers l'arrière, une partie avant 56 comportant l'entrée du conduit annulaire 50 via laquelle pénètre le flux d'air 52 ainsi qu'une partie arrière 58 comportant la sortie du conduit annulaire 50 via laquelle sort le flux d'air 52.

L'ensemble de propulsion 44 comprend un dispositif d'inversion de poussée 60, positionné au niveau de la nacelle 48, comportant au moins une partie mobile 62 configurée pour occuper un premier état, visible sur les figures 5 et 6, dans lequel la partie mobile 62 ne génère aucune ouverture à travers la nacelle 48 et un deuxième état, visible sur la figure 7, dans lequel la partie mobile 62 génère au moins une ouverture latérale 64 traversant la nacelle 48, positionnée entre l'entrée et la sortie du conduit annulaire 50.

Selon une configuration, la partie mobile 62 correspond à la partie arrière 58 de la nacelle 48 qui est mobile par rapport à une structure fixe S48 de la nacelle 48 et configurée pour se déplacer entre une position amont dans laquelle la partie arrière 58 est en contact avec la partie avant 56, correspondant au premier état de la partie mobile 62 et à un état fermé de la (ou des) ouverture(s) latérale(s) 64 comme illustré sur les figures 5 et 6, ainsi qu'une position aval dans laquelle la partie arrière 58 est espacée de la partie avant 56, correspondant au deuxième état de la partie mobile 62 et à un état ouvert de la (ou des) ouverture(s) latérale(s) 64 comme illustré sur la figure 7, la (ou les) ouverture(s) latérale(s) 64 étant positionnée(s) entre les parties avant et arrière 56, 58.

Le dispositif d'inversion de poussée 60 comprend également au moins une barrière 66 mobile entre une position repliée, comme illustré sur les figures 5 et 6, dans laquelle la barrière 66 ne s'étend pas dans le conduit annulaire 50 et n'interfère pas avec le flux d'air 52 circulant dans le conduit annulaire 50 ainsi qu'une position déployée, comme illustré sur la figure 7, dans laquelle la barrière 66 s'étend en travers du conduit annulaire 50 et dévie au moins partiellement le flux d'air 52 circulant dans le conduit annulaire 50 en direction d'au moins une ouverture latérale 64 à l'état ouvert.

Selon une configuration, chaque barrière 66 est positionnée à l'arrière d'une ouverture latérale 64 lorsque cette dernière est à l'état ouvert et s'étend de la nacelle 48 jusqu'à la motorisation 46, en position déployée.

Le dispositif d'inversion de poussée 60 est configuré pour occuper un état inactivé lorsque la (ou les) ouverture(s) latérale(s) 64 est (ou sont) à l'état fermé et la (ou les) barrière(s) 66 est (ou sont) en position repliée, le flux d'air 52 circulant dans le conduit annulaire 50 de l'entrée jusqu'à la sortie de la nacelle 48, et un état activé lorsque la (ou les) ouverture(s) latérale(s) 64 est (ou sont) à l'état ouvert et la (ou les) barrière(s) 66 est (ou sont) en position déployée, au moins une partie du flux d'air 52 circulant dans le conduit annulaire 50 étant déviée vers la (ou les) ouverture(s) latérale(s) 64.

Le dispositif d'inversion de poussée 60 comprend également au moins une cascade 68 positionnée au niveau d'une ouverture latérale 64, au moins lorsque cette dernière est à l'état ouvert, configurée pour contrôler l'orientation du flux d'air 52 dévié par la (ou les) barrière(s) 66. Chaque cascade 68 correspond à une partie de la structure fixe S48 de la nacelle 48. Chaque cascade 68 comprend un bord avant 68.1 orienté vers l'avant de la nacelle 48 ainsi qu'un bord arrière 68.2 orienté vers l'arrière de la nacelle 48.

Selon une configuration, la partie arrière 58 comprend une paroi extérieure 58.1 formant une partie de la surface extérieure de la nacelle 48, une paroi intérieure 58.2 formant une partie de la surface intérieure F48 de la nacelle 48 ainsi qu'au moins un logement L58 ouvert vers l'amont en direction de la partie avant 56, entre les parois extérieure et intérieure 58.1, 58.2. Selon cette configuration, la (ou les) cascade(s) 68 est (ou sont) disposée(s) au moins partiellement dans le logement L58 de la partie arrière 58 lorsque la partie arrière 58 est dans la position amont correspondant à l'état fermé de l'ouverture latérale 64, les parois extérieure et intérieure 58.1, 58.2 dégageant la (ou les) cascade(s) 68 lorsque la partie arrière 58 est dans la position aval correspondant à l'état ouvert de l'ouverture latérale 64.

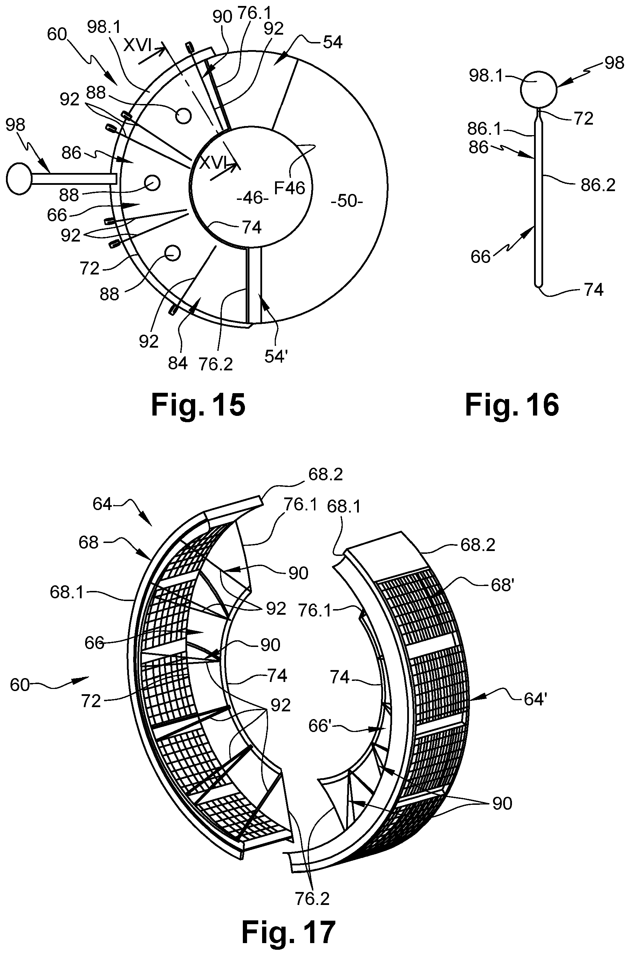

Selon un agencement visible sur la figure 17, le dispositif d'inversion de poussée comprend des ouvertures latérales gauche et droite 64, 64' qui s'étendent chacune entre les bifurcations supérieure et inférieure 54, 54', au moins une cascade 68, 68' pour chaque ouverture latérale gauche ou droite 64, 64' qui s'étend sur quasiment toute la surface de l'ouverture latérale 64, 64', deux barrières gauche et droite 66, 66', une pour chaque ouverture latérale gauche et droite 64, 64', la barrière gauche 66 étant configurée pour obturer à en position déployée la partie gauche du conduit annulaire 50 en s'étendant de la bifurcation supérieure 54 jusqu'à la bifurcation inférieure 54', la barrière droite 66' étant configurée pour obturer en position déployée la partie droite du conduit annulaire 50 en s'étendant de la bifurcation supérieure 54 jusqu'à la bifurcation inférieure 54'. En variante, chaque ouverture latérale droite ou gauche 64, 64' comprend plusieurs barrières 66.

Bien entendu, l'invention n'est pas limitée à ces agencements. Quel que soit l'agencement, le dispositif d'inversion de poussée 60 comprend au moins une ouverture latérale 64 configurée pour occuper un état ouvert ou un état fermé ainsi qu'au moins une barrière 66 configurée pour occuper une position repliée dans laquelle la barrière 66 n'est pas en saillie dans le conduit annulaire 50 et une position déployée dans laquelle la barrière 66 s'étend en travers du conduit annulaire 50 pour dévier au moins une partie du flux d'air 52 circulant dans le conduit annulaire 50 en direction de l'ouverture latérale 64.

Selon l'invention, au moins une barrière 66 est gonflable et configurée pour occuper un état dégonflé, en position repliée, dans lequel elle est souple et un état gonflé, en position déployée, dans lequel elle est sensiblement rigide ou semi-rigide. La barrière gonflable 66 est réalisée en un matériau souple.

Chaque barrière gonflable 66 comprend un premier bord 72, solidaire de la structure fixe S48 de la nacelle 48, qui s'étend sur une partie de la circonférence de la nacelle 48, un deuxième bord 74, distant du premier bord 72, configuré pour être en contact avec la surface extérieure F46 de la motorisation 46 lorsque la barrière gonflable 66 est à l'état gonflé ainsi que des bords radiaux 76.1, 76.2 reliant les premier et deuxième bords 72, 74. Lorsque la barrière gonflable 66 est à l'état gonflé, elle s'étend sur au moins un secteur angulaire du conduit annulaire 50. Selon une configuration visible sur la figure 11, le dispositif d'inversion de poussée 60 comprend deux barrières gonflables 66, 66', chacune d'elles présentant un premier bord radial 76.1 accolé à la bifurcation supérieure 54 ainsi qu'un deuxième bord radial 76.2 accolé à la bifurcation inférieure 54' lorsque les barrières gonflables 66, 66' sont à l'état gonflé. Selon un agencement, le premier bord 72 s'étend le long du bord arrière 68.2 de la cascade 68 vers laquelle la barrière gonflable 66 oriente au moins une partie du flux d'air 52 à l'état gonflé.

Selon une configuration visible sur la figure 7, la barrière gonflable 66 comprend au moins un renfort, comme une surépaisseur ou un boudin gonflable, au moins au niveau du deuxième bord 74 et configuré pour être en contact avec la surface extérieure F46 de la motorisation 46 lorsque la barrière gonflable 66 est à l'état gonflé.

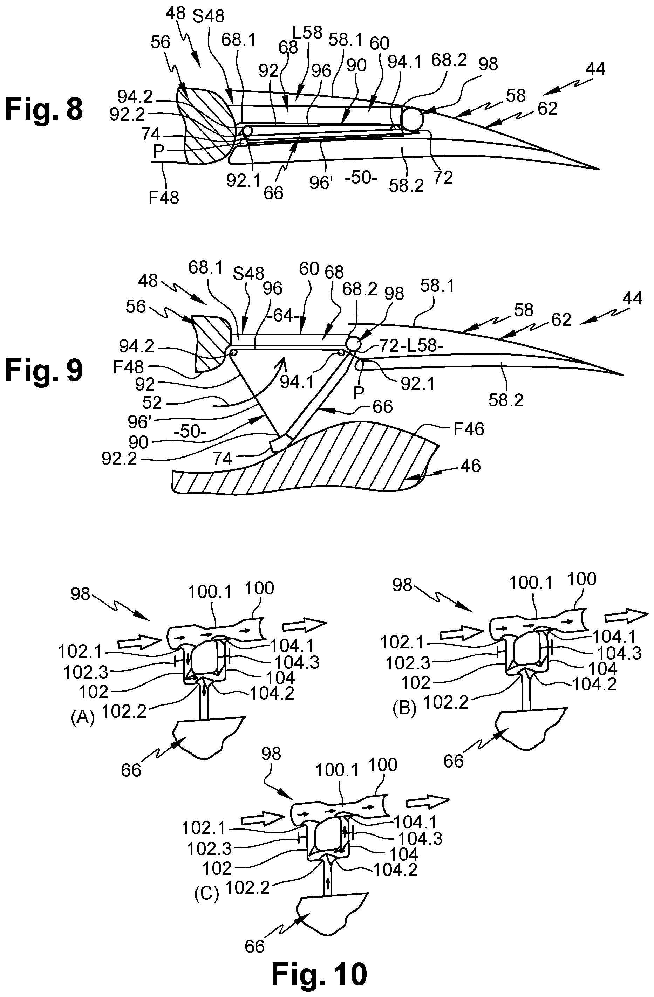

Selon un mode de réalisation visible sur les figures 9, 11 et 12, au moins une barrière gonflable 66 comprend au moins une zone non gonflable 78 au droit de laquelle la barrière gonflable 66 comprend une unique peau 78.1 ainsi qu'au moins une zone gonflable 80 au droit de laquelle la barrière gonflable 66 présente deux peaux espacées 80.1, 80.2 délimitant une cavité pour un fluide. Au moins une zone gonflable 80 se présente sous la forme d'un boudin gonflable. Selon un agencement, la barrière gonflable 66 comprend au moins une zone non gonflable 78 encadrée par une zone gonflable 80 en forme de boudin gonflable. Comme illustré sur la figure 11, la barrière gonflable 66 comprend plusieurs zones non gonflables 78 encadrées chacune par une zone gonflable 80 en forme de boudin gonflable.

Selon un autre mode de réalisation visible sur les figures 13 et 14, au moins une barrière gonflable 66 comprend au moins une première zone gonflable 82 présentant deux peaux 82.1, 82.2 faiblement espacées formant une plaque gonflable ainsi qu'au moins une deuxième zone gonflable 84 présentant deux peaux 84.1, 84.2 formant un boudin gonflable. Selon un agencement, la barrière gonflable 66 comprend au moins une première zone gonflable 82 encadrée par une deuxième zone gonflable 84 en forme de boudin gonflable. Comme illustré sur la figure 13, la barrière gonflable 66 comprend plusieurs premières zones gonflables 82, chacune en forme de plaque gonflable, encadrées chacune par une deuxième zone gonflable 84 en forme de boudin gonflable. Les peaux 82.1 et 84.1 des première et deuxième zones gonflables 82, 84 peuvent être une unique et même peau. Il en est de même pour les peaux 82.2 et 84.2.

Selon un autre mode de réalisation visible sur les figures 15 et 16, la barrière gonflable 66 comprend une unique zone gonflable 86 qui s'étend sur toute la superficie de la barrière gonflable 66 et présente deux peaux 86.1, 86.2 faiblement espacées formant une plaque gonflable.

Bien entendu, l'invention n'est pas limitée à ces modes de réalisation pour la barrière gonflable 66. Quel que soit le mode de réalisation, la barrière gonflable 66 comprend au moins une zone gonflable 80 à 86 permettant de rigidifier la barrière gonflable 66 à l'état gonflé. De même, la barrière gonflable 66 peut combiner les modes de réalisation visibles sur les figures 11 et 13 sur des secteurs angulaires différents.

Selon une configuration, la barrière gonflable 66 comprend au moins un orifice 88 la traversant et permettant de faire communiquer, lorsque la barrière gonflable 66 est à l'état gonflé, la zone du conduit annulaire 50 située en amont de la barrière gonflable 66 et celle située en aval. Le nombre d'orifices 88 et leurs dimensions sont ajustés en fonction du débit souhaité pour le flux d'air 52 orienté vers la (ou les) orifice(s) latérale(s) 64.

Selon une configuration, en position déployée, lorsque la barrière gonflable 66 est à l'état gonflé, le deuxième bord 74 est décalé vers l'avant de la nacelle 48 par rapport au premier bord 72.

Selon un mode de réalisation, le dispositif d'inversion de poussée 60 comprend au moins un système de maintien 90 configuré pour maintenir la barrière gonflable 66 en position déployée, le deuxième bord 74 étant décalé vers l'avant de la nacelle 48 par rapport au premier bord 72, et empêcher le deuxième bord 74 de la barrière gonflable 66 de se décaler vers l'arrière par rapport à son premier bord 72.

Selon une configuration, le système de maintien 90 comprend au moins un lien souple 92, comme un câble, un filin, une corde ou autres par exemple, présentant une première extrémité 92.1 reliée à la nacelle 48 et une deuxième extrémité 92.2 reliée au deuxième bord 74 de la barrière gonflable 66.

Selon une première variante visible sur la figure 7 par exemple, la première extrémité 92.1 du lien souple 92 est reliée à la structure fixe S48 de la nacelle 48.

Selon une deuxième variante visible sur les figures 8 et 9, la première extrémité 92.1 du lien souple 92 est reliée en un point d'attache P de la partie arrière 58 mobile de la nacelle 48, positionné au bord avant de la paroi intérieure 58.2 de la partie arrière 58. En complément, le système de maintien 90 comprend une première poulie 94.1 et solidaire du bord arrière 68.2 de la cascade 68, ainsi qu'une deuxième poulie 94.2 décalée vers l'amont par rapport à la première poulie 94.1, solidaire du bord avant 68.1 de la cascade 68. Ainsi, à partir de sa première extrémité 92.1, le lien souple 92 défile sur la première poulie 94.1 puis sur la deuxième poulie 94.2 avant d'atteindre la deuxième extrémité 92.2. Selon cette deuxième variante, le lien souple 92 permet non seulement de maintenir la barrière gonflable 66 en position déployée mais également de la tirer en direction de la nacelle 48 lors de la désactivation du dispositif d'inversion de poussée 60. Lorsque la partie arrière 58 est en position amont (l'ouverture latérale 64 étant à l'état fermé et la barrière gonflable 66 à l'état dégonflé), comme illustré sur la figure 8, le point d'attache P est positionné au droit ou à proximité de la deuxième poulie 94.2. Dans cette situation, le lien souple 92 comprend deux brins 96, 96' sensiblement parallèles. Lorsque la partie arrière 58 est en position aval (l'ouverture latérale 64 étant à l'état ouvert et la barrière gonflable 66 à l'état gonflé), comme illustré sur la figure 8, le point d'attache P est positionné au droit ou à proximité de la première poulie 94.1. Dans cette situation, le lien souple 92 comprend un premier brin 96 qui s'étend sensiblement parallèlement à la cascade 68 ainsi qu'un deuxième brin 96' qui s'étend en travers du conduit annulaire 50. Lors de la désactivation du dispositif d'inversion de poussée 60, le lien souple 92 étant relié à la partie arrière 58 mobile, le mouvement de translation de la partie arrière 58 engendre une traction du lien souple 92 sur le deuxième bord 74 de la barrière gonflable 66 en direction de la nacelle 48. Cette variante favorise le retour en position repliée de la barrière gonflable 66.

Selon une variante simplifiée, le système de maintien 90 comprend au moins une poulie 94.1 reliée à la structure fixe S48 de la nacelle 48 et guidant le lien souple 92, la poulie 94.1 et le point d'attache P reliant le lien souple 92 et la partie arrière 58 étant agencés de manière à ce que le point d'attache P soit décalé vers l'amont par rapport à la poulie 94.1 lorsque la partie arrière 58 est en position amont et durant une partie du mouvement de translation de la partie arrière 58 vers la position aval.

Comme illustré sur les figures 11, 13, 15, un système de maintien 90 comprend plusieurs liens 92 pour une même barrière gonflable 66, répartis sur la circonférence du conduit annulaire 50 et reliés aux zones les plus rigides de la barrière gonflable 66.

Selon un mode de réalisation, le dispositif d'inversion de poussée 60 comprend au moins un système d'alimentation 98 configuré pour alimenter en un fluide au moins une barrière gonflable 66. Selon une configuration, le système d'alimentation 98 comprend un système de prélèvement d'air au niveau de la motorisation 46 également utilisé pour alimenter un système de conditionnement d'air d'une cabine de passagers de l'aéronef.

Selon une configuration, le système d'alimentation 98 est configuré non seulement pour gonfler la barrière gonflable 66 mais également pour la dégonfler.

Selon un mode de réalisation, le système d'alimentation 98 comprend :
- un conduit principal 100 dans lequel circule le fluide prévu pour gonfler la barrière gonflable 66, ce conduit principal 100 comportant une réduction de section 100.1,
- un premier conduit secondaire 102 présentant une première extrémité 102.1 débouchant dans le conduit principal 100 en amont de la réduction de section 100.1, une deuxième extrémité 102.2 reliée à la barrière gonflable 66 ainsi qu'une première vanne 102.3 (positionnée entre les première et deuxième extrémités 102.1, 102.2) configurée pour occuper un état passant dans lequel elle autorise un flux à circuler de la première extrémité 102.1 vers la deuxième extrémité 102.2 et un état bloqué dans lequel elle empêche tout flux entre les première et deuxième extrémités 102.1, 102.2,
- un deuxième conduit secondaire 104 présentant une première extrémité 104.1 débouchant dans le conduit principal 100 au droit de la réduction de section 100.1, une deuxième extrémité 104.2 reliée à la barrière gonflable 66 ainsi qu'une deuxième vanne 104.3 (positionnée entre les première et deuxième extrémités 104.1, 104.2) configurée pour occuper un état passant dans lequel elle autorise un flux à circuler de la deuxième extrémité 104.2 vers la première extrémité 104.1 et un état bloqué dans lequel elle empêche tout flux entre les première et deuxième extrémités 104.1, 104.2.

Comme illustré sur la partie (A) de la figure 10, lorsque la première vanne 102.3 est à l'état passant et la deuxième vanne 104.3 à l'état bloqué, le fluide circulant dans le conduit principal 100 est au moins partiellement dévié en raison de la réduction de section 100.1 vers le premier conduit secondaire 102 pour alimenter la barrière gonflable 66. Comme illustré sur la partie (B) de la figure 10, lorsque les première et deuxième vannes 102.3, 104.3 sont à l'état bloqué, aucun fluide ne transite entre le conduit principal 100 et la barrière gonflable 66. Comme illustré sur la partie (C) de la figure 10, lorsque la première vanne 102.3 est à l'état bloqué et la deuxième vanne 104.3 à l'état passant, le fluide circulant dans le conduit principal 100 aspire par effet venturi le fluide dans le deuxième conduit secondaire 104, provoquant le dégonflage de la barrière gonflable 66.

Selon un autre mode de réalisation, le système d'alimentation 98 comprend un piston configuré pour modifier le volume d'une chambre contenant le fluide prévu pour gonfler la barrière gonflable 66 et communiquant avec au moins une barrière gonflable 66. Lorsque le piston diminue le volume de la chambre, cela provoque le transfert du fluide contenu dans la chambre vers la barrière gonflable 66. Lorsque le piston augmente le volume de la chambre, cela provoque une aspiration du fluide contenu dans la barrière gonflable 66 vers la chambre. Selon une configuration, un conduit d'alimentation 98.1 s'étend sur toute la longueur du premier bord 72 de la barrière gonflable 66, comme illustré sur les figures 11, 13 et 15.

Bien entendu, l'invention n'est pas limitée ces modes de réalisation pour le système d'alimentation 98.

Selon un mode de réalisation, le logement L58 de la partie arrière 58 de la nacelle 48 est configuré pour loger au moins partiellement la barrière gonflable 66 à l'état dégonflé.

Selon une configuration visible sur les figures 5 à 7, la partie arrière 58 est configurée de telle sorte que la paroi intérieure 58.2 soit écartée de la partie avant 56 lorsque la partie arrière 58 est dans la position amont (correspondant à l'état fermé de la (ou des) ouverture(s) latérale(s) 64). Ainsi, le dispositif d'inversion de poussée 60 comprend au moins un passage 106 (visible sur la figure 6), entre la paroi intérieure 58.2 de la partie arrière 58 et la partie avant 56, permettant de faire communiquer le logement L58 et le conduit annulaire 50 lorsque la partie arrière 58 est dans la position amont. En complément, le dispositif d'inversion de poussée 60 comprend, pour chaque passage 106, au moins une trappe 108 mobile entre une position fermée dans laquelle elle obture le passage 106 et une position ouverte dans laquelle elle dégage le passage 106. Selon un agencement, chaque trappe 108 est reliée à la partie arrière 58 par une articulation 110 comprenant un axe de pivotement A110 positionné dans un plan transversal sensiblement perpendiculaire à une direction radiale.

Selon un agencement, la nacelle 48 comprend deux passages 106, un à droite des bifurcations supérieure et inférieure 54, 54' et un autre à gauche, ainsi que, pour chaque passage 106, plusieurs trappes 108 réparties sur la circonférence de la nacelle 48.

Selon un mode de réalisation, le dispositif d'inversion de poussée 60 comprend, pour chaque trappe 108, au moins un ressort 112 intercalé entre la partie arrière 58 et la trappe 108 correspondante et configuré pour pousser la trappe 108 en position ouverte.

Selon une configuration, chaque trappe 108 comprend une extension 114 et le dispositif d'inversion de poussée 60 comprend, pour chaque trappe 108, au moins une butée fixe 116 solidaire de la structure fixe S48 de la nacelle 48, l'extension 114 et la butée fixe 116 étant agencées de sorte que la trappe 108 bascule automatiquement en position fermée lors d'un mouvement de la partie arrière 58 de la position aval vers la position amont.

Plus précisément, l'extension 114 et la butée fixe 116 sont agencées de sorte que :
- dans la position amont de la partie arrière 58, l'extension 114 et la butée fixe 116 soient en contact l'une avec l'autre, la trappe 108 étant en position fermée malgré l'effort du ressort 112,
- lors du déplacement de la partie arrière 58 vers l'arrière, l'extension 114 s'écarte de la butée fixe 116 et ne retienne plus la trappe 108 en position fermée qui pivote en raison de son poids et/ou de l'effort du ressort 112, comme illustré sur la figure 6,
- lors du déplacement de la partie arrière 58 vers l'avant, à l'approche de la position amont, l'extension 114 prenne appui contre la butée fixe 116, la translation de la partie arrière 58 provoquant le pivotement de la trappe 108 en position fermée à l'encontre de l'effort du ressort 112.
Les trappes 108 favorisent le retour dans le logement L58 de la barrière gonflable 66. Le mécanisme de fermeture automatique des trappes 108 lors du mouvement de translation de la partie arrière 58 ne nécessite aucun actionneur, ce qui contribue à ne pas augmenter la masse du dispositif d'inversion de poussée.

Bien entendu, le dispositif d'inversion de poussée 60 pourrait fonctionner sans passages 106 et sans trappes 108.

Le principe de fonctionnement du dispositif d'inversion de poussée 60 est maintenant décrit au regard des différentes figures.

Lorsque le dispositif d'inversion de poussée 60 est à l'état inactivé, chaque barrière gonflable 66 à l'état dégonflé est dans un logement L58, la partie arrière 58 de la nacelle 48 est dans la position amont accolée à la partie avant 56, les ouvertures latérales 64 sont à l'état fermé et les trappes 108 sont dans la position fermée, comme illustré sur les figures 5 et 8.

Lorsque le dispositif d'inversion de poussée 60 est commuté à l'état activé, la partie arrière 58 se translate progressivement vers l'arrière. En début de course, cette translation vers l'arrière provoque l'ouverture des trappes 108 qui basculent en position ouverte, comme illustré sur la figure 6. La partie arrière 58 se translate jusqu'à atteindre sa position aval de manière à obtenir une ouverture complète des ouvertures latérales 64

Le gonflage des barrières gonflables 66 provoque le déploiement de chacune d'elles dans le conduit annulaire 50 jusqu'à ce que le deuxième bord 74 soit en contact avec la motorisation 46. Dès lors, au moins une partie du flux d'air 52 circulant dans le conduit annulaire 50 est déviée en direction des ouvertures latérales 64.

Les liens souples 92 permettent de maintenir les barrières gonflables 66 en contact avec la motorisation 46 et interdisent aux barrières gonflables 66 de se plier vers l'arrière dans le conduit annulaire 50.

Lors de la désactivation du dispositif d'inversion de poussée 60, les barrières gonflables 66 sont dégonflées. La partie arrière 58 se translate vers l'avant en direction de la partie avant 56. Lors de ce mouvement de translation, chaque barrière gonflable 66 revient dans son logement L58. Selon le mode de réalisation visible sur les figures 8 et 9, les liens souples 92 tirent sur le deuxième bord 74 de chaque barrière gonflable 66 en direction de son logement L58.

A l'approche de la partie avant 56, comme illustré sur la figure 6, pour chaque trappe 108, son extension 114 prend appui contre la butée fixe 116 correspondante et la translation de la partie arrière 58 provoque le pivotement de chaque trappe 108 en position fermée. Ce mouvement de pivotement des trappes 108 favorise le retour de chaque barrière gonflable 66 dans son logement L58.

Lorsque la partie arrière 58 est en contact avec la partie avant 56, les ouvertures latérales 64 sont à l'état fermé, les trappes 108 dans la position fermée et chaque barrière gonflable 66 à l'état dégonflé dans son logement L58. Le dispositif d'inversion de poussée est à l'état inactivé. Le dispositif d'inversion de poussée de l'invention permet de réduire la masse embarquée car les barrières gonflables 66 sont plus légères que les portes renforcées de l'art antérieur et ne nécessitent ni articulation ni bielle pour provoquer leur déploiement.

## Revendications

1. Ensemble de propulsion d'aéronef comprenant une motorisation (46), une nacelle (48) entourant la motorisation (46), un conduit annulaire (50), entre la motorisation (46) et la nacelle (48), dans lequel circule en fonctionnement un flux d'air (52) d'amont en aval ainsi qu'un dispositif d'inversion de poussée (60) comportant au moins une ouverture latérale (64), traversant la nacelle (48) et configurée pour occuper un état ouvert ou un état fermé, et au moins une barrière (66) configurée pour occuper une position repliée dans laquelle la barrière (66) n'est pas en saillie dans le conduit annulaire (50) et une position déployée dans laquelle la barrière (66) s'étend en travers du conduit annulaire (50) pour dévier au moins une partie du flux d'air (52) circulant dans le conduit annulaire (50) en direction de l'ouverture latérale (64), la barrière (66) présentant un premier bord (72) solidaire de la nacelle (48) ainsi qu'un deuxième bord (74) distant du premier bord (72) et configuré pour être en contact avec la motorisation (46) en position déployée ; au moins une barrière (66) étant gonflable et configurée pour occuper un état dégonflé, en position repliée, dans lequel la barrière (66) est souple et un état gonflé, en position déployée, dans lequel la barrière (66) est sensiblement rigide ou semi-rigide, le dispositif d'inversion de poussée (60) comprenant au moins un système d'alimentation (98) configuré pour alimenter en fluide la barrière (66) gonflable, **caractérisé en ce que** le dispositif d'inversion de poussée (60) comprend au moins un système de maintien (90) configuré pour maintenir la barrière gonflable (66) en position déployée et **en ce que** le système de maintien (90) comprend au moins un lien souple (92) présentant une première extrémité (92.1) reliée à la nacelle (48) et une deuxième extrémité (92.2) reliée au deuxième bord (74) de la barrière gonflable (66).

2. Ensemble de propulsion d'aéronef selon la revendication précédente, **caractérisé en ce que** la nacelle (48) comprend une partie avant (56) et une partie arrière (58) mobile entre une position amont dans laquelle la partie arrière (58) est en contact avec la partie avant (56) ainsi qu'une position aval dans laquelle la partie arrière (58) est espacée de la partie avant (56), l'ouverture latérale (64) étant située entre les parties avant et arrière (56, 58), **en ce que** le lien souple (92) est relié à un point d'attache (P) de la partie arrière (58) et **en ce que** le système de maintien (90) comprend au moins une poulie (94.1) reliée à une structure fixe (S48) de la nacelle (48) et configurée pour guider le lien souple (92), la poulie (94.1) et le point d'attache (P) étant agencés de manière à ce que le point d'attache (P) soit décalé vers l'amont par rapport à la poulie (94.1) lorsque la partie arrière (58) est en position amont et durant une partie d'un mouvement de la partie arrière (58) de la position amont vers la position aval.

3. Ensemble de propulsion d'aéronef selon la revendication précédente, **caractérisé en ce que** le système de maintien (90) comprend des première et deuxième poulies (94.1, 94.2) reliées à la structure fixe (S48) de la nacelle (48), la deuxième poulie (94.2) étant décalée vers l'amont par rapport à la première poulie (94.1), le lien souple (92) défilant à partir de sa première extrémité (92.1) sur la première poulie (94.1) puis sur la deuxième poulie (94.2), et **en ce que** les première et deuxième poulies (94.1, 94.2) et le point d'attache (P) sont agencés de manière à ce que le point d'attache (P) soit positionné au droit ou à proximité de la deuxième poulie (94.2) lorsque la partie arrière (58) est en position amont et au droit ou à proximité de la première poulie (94.1) lorsque la partie arrière (58) est en position aval.

4. Ensemble de propulsion d'aéronef selon l'une des revendications précédentes, **caractérisé en ce que** le système d'alimentation (98) comprend un système de prélèvement d'air au niveau de la motorisation (46).

5. Ensemble de propulsion selon l'une des revendications précédentes, **caractérisé en ce que** le système d'alimentation (98) comprend :
- un conduit principal (100) dans lequel circule d'amont en aval un fluide prévu pour gonfler la barrière gonflable (66), le conduit principal (100) comportant une réduction de section (100.1),
- un premier conduit secondaire (102) présentant une première extrémité (102.1) débouchant dans le conduit principal (100) en amont de la réduction de section (100.1), une deuxième extrémité (102.2) reliée à la barrière gonflable (66) ainsi qu'une première vanne (102.3) configurée pour occuper un état passant dans lequel la première vanne (102.3) autorise un flux à circuler de la première extrémité (102.1) vers la deuxième extrémité (102.2) et un état bloqué dans lequel la première vanne (102.3) empêche tout flux entre les première et deuxième extrémités (102.1, 102.2),
- un deuxième conduit secondaire (104) présentant une première extrémité (104.1) débouchant dans le conduit principal (100) au droit de la réduction de section (100.1), une deuxième extrémité (104.2) reliée à la barrière gonflable (66) ainsi qu'une deuxième vanne (104.3) configurée pour occuper un état passant dans lequel la deuxième vanne (104.3) autorise un flux à circuler de la deuxième extrémité (104.2) vers la première extrémité (104.1) et un état bloqué dans lequel la deuxième vanne (104.3) empêche tout flux entre les première et deuxième extrémités (104.1, 104.2).

6. Ensemble de propulsion d'aéronef selon l'une des revendications précédentes, **caractérisé en ce que** le système d'alimentation (98) comprend une chambre contenant un fluide prévu pour gonfler la barrière gonflable (66) et communiquant avec la barrière gonflable (66) ainsi qu'un piston configuré pour modifier le volume de la chambre.

7. Ensemble de propulsion d'aéronef selon l'une des revendications précédentes, **caractérisé en ce que** la nacelle (48) comprend une partie avant (56) et une partie arrière (58) mobile entre une position amont dans laquelle la partie arrière (58) est en contact avec la partie avant (56) ainsi qu'une position aval dans laquelle la partie arrière (58) est espacée de la partie avant (56), l'ouverture latérale (64) étant située entre les parties avant et arrière (56, 58) et **en ce que** la partie arrière (58) comprend au moins un logement (L58) ouvert en direction de la partie avant (56) et configuré pour loger au moins partiellement la barrière gonflable (66) à l'état dégonflé.

8. Ensemble de propulsion d'aéronef selon la revendication précédente, **caractérisé en ce que** le dispositif d'inversion de poussée (60) comprend au moins un passage (106) permettant de faire communiquer le logement (L58) et le conduit annulaire (50) lorsque la partie arrière (58) est dans la position amont ainsi que, pour chaque passage (106), au moins une trappe (108) mobile entre une position fermée dans laquelle la trappe (108) obture le passage (106) et une position ouverte dans laquelle la trappe (108) dégage le passage (106).

9. Ensemble de propulsion d'aéronef selon la revendication précédente, **caractérisé en ce que** le dispositif d'inversion de poussée (60) comprend, pour chaque trappe (108), une extension (114) solidaire de la trappe (108) ainsi qu'au moins une butée fixe (116) solidaire de la structure fixe (S48) de la nacelle (48), l'extension (114) et la butée fixe (116) étant agencées de sorte que la trappe (108) bascule automatiquement en position fermée lors d'un mouvement de la partie arrière (58) de la position aval vers la position amont.

10. Ensemble de propulsion d'aéronef selon l'une des revendications précédentes, **caractérisé en ce que** la barrière gonflable (66) comprend au moins un renfort au moins au niveau du deuxième bord (74).

11. Ensemble de propulsion d'aéronef selon l'une des revendications précédentes, **caractérisée en ce que** la barrière gonflable (66) comprend au moins un orifice (88) la traversant et permettant de faire communiquer, lorsque la barrière gonflable (66) est à l'état gonflé, une zone du conduit annulaire (50) située en amont de la barrière gonflable (66) et une zone du conduit annulaire (50) située en aval.

12. Ensemble de propulsion d'aéronef selon l'une des revendications précédentes, **caractérisé en ce que** la barrière gonflable (66) comprend au moins une zone non gonflable (78) encadrée par une zone gonflable (80).

13. Ensemble de propulsion d'aéronef selon l'une des revendications précédentes, **caractérisé en ce que** la barrière gonflable (66) comprend au moins une première zone gonflable (82) en forme de plaque gonflable encadrée par une deuxième zone gonflable (84) en forme de boudin gonflable.

14. Ensemble de propulsion d'aéronef selon l'une des revendications 1 à 11, **caractérisé en ce que** la barrière gonflable (66) comprend une unique zone gonflable (86) qui s'étend sur toute la superficie de la barrière gonflable (66).

## Patentansprüche

1. Antriebseinheit für ein Luftfahrzeug mit einer Motorisierung (46), einer Gondel (48), die die Motorisierung (46) umgibt, einem ringförmigen Kanal (50) zwischen der Motorisierung (46) und der Gondel (48), in dem im Betrieb ein Luftstrom (52) von stromaufwärts nach stromabwärts strömt, sowie einer Schubumkehrvorrichtung (60) mit wenigstens einer seitlichen Öffnung (64), die die Gondel (48) durchquert und so eingerichtet ist, dass sie einen offenen Zustand oder einen geschlossenen Zustand einnimmt, und mit wenigstens einer Barriere (66), die so eingerichtet ist, dass sie eine eingefahrene Position einnimmt, in der die Barriere (66) nicht in den ringförmigen Kanal (50) hineinragt, und eine ausgefahrene Position einnimmt, in der sich die Barriere (66) quer über den ringförmigen Kanal (50) erstreckt, um wenigstens einen Teil des in dem ringförmigen Kanal (50) strömenden Luftstroms (52) in Richtung der seitlichen Öffnung (64) umzulenken, wobei die Barriere (66) einen ersten Rand (72), der fest mit der Gondel (48) verbunden ist, sowie einen zweiten Rand (74) aufweist, der vom ersten Rand (72) entfernt und so eingerichtet ist, dass er in der ausgefahrenen Position mit der Motorisierung (46) in Kontakt steht; wobei wenigstens eine Barriere (66) aufblasbar ist und so eingerichtet ist, dass sie in der eingefahrenen Position einen entleerten Zustand einnimmt, in dem die Barriere (66) flexibel ist, und in der ausgefahrenen Position einen aufgeblasenen Zustand einnimmt, in dem die Barriere (66) im Wesentlichen starr oder halbstarr ist, wobei die Schubumkehrvorrichtung (60) wenigstens ein Versorgungssystem (98) umfasst, das so eingerichtet ist, dass es die aufblasbare Barriere (66) mit Fluid versorgt, **dadurch gekennzeichnet, dass** die Schubumkehrvorrichtung (60) wenigstens ein Haltesystem (90) umfasst, das so eingerichtet ist, dass es die aufblasbare Barriere (66) in der ausgefahrenen Position hält, und dass das Haltesystem (90) wenigstens eine flexible Verbindung (92) umfasst, die ein erstes Ende (92.1) aufweist, das mit der Gondel (48) verbunden ist, und ein zweites Ende (92.2) aufweist, das mit dem zweiten Rand (74) der aufblasbaren Barriere (66) verbunden ist.

2. Antriebseinheit für ein Luftfahrzeug nach dem vorhergehenden Anspruch, **dadurch gekennzeichnet, dass** die Gondel (48) einen vorderen Teil (56) und einen hinteren Teil (58) aufweist, der zwischen einer stromaufwärtigen Position, in der der hintere Teil (58) mit dem vorderen Teil (56) in Kontakt steht, und einer stromabwärtigen Position, in der der hintere Teil (58) von dem vorderen Teil (56) beabstandet ist, beweglich ist, wobei die seitliche Öffnung (64) zwischen dem vorderen und dem hinteren Teil (56, 58) angeordnet ist, dass die flexible Verbindung (92) mit einem Befestigungspunkt (P) des hinteren Teils (58) verbunden ist und dass das Haltesystem (90) wenigstens eine Rolle (94.1) umfasst, die mit einer festen Struktur (S48) der Gondel (48) verbunden und so eingerichtet ist, dass sie die flexible Verbindung (92) führt, wobei die Rolle (94.1) und der Befestigungspunkt (P) so angeordnet sind, dass der Befestigungspunkt (P) in Bezug auf die Rolle (94.1) stromaufwärts verschoben ist, wenn sich der hintere Teil (58) in der stromaufwärtigen Position befindet und während eines Teils einer Bewegung des hinteren Teils (58) von der stromaufwärtigen Position zur stromabwärtigen Position.

3. Antriebseinheit für ein Luftfahrzeug nach dem vorhergehenden Anspruch, **dadurch gekennzeichnet, dass** das Haltesystem (90) eine erste und eine zweite Rolle (94.1, 94.2) umfasst, die mit der festen Struktur (S48) der Gondel (48) verbunden sind, wobei die zweite Rolle (94.2) in Bezug auf die erste Rolle (94.1) stromaufwärts versetzt ist, wobei die flexible Verbindung (92) von seinem ersten Ende (92.1) aus über die erste Rolle (94.1) und dann über die zweite Rolle (94.2) geführt ist, und dass die erste und die zweite Rolle (94.1, 94.2) und der Befestigungspunkt (P) so angeordnet sind, dass der Befestigungspunkt (P) gegenüber oder in der Nähe der zweiten Rolle (94.2) angeordnet ist, wenn sich der hintere Teil (58) in der stromaufwärtigen Position befindet, und gegenüber oder in der Nähe der ersten Rolle (94.1) angeordnet ist, wenn sich der hintere Teil (58) in der stromabwärtigen Position befindet.

4. Antriebseinheit für ein Luftfahrzeug nach einem der vorhergehenden Ansprüche, **dadurch gekennzeichnet, dass** das Versorgungssystem (98) ein System zur Luftentnahme im Bereich der Motorisierung (46) umfasst.

5. Antriebseinheit nach einem der vorhergehenden Ansprüche, **dadurch gekennzeichnet, dass** das Versorgungssystem (98) umfasst:
- eine Hauptleitung (100), in der ein Fluid, das zum Aufblasen der aufblasbaren Barriere (66) vorgesehen ist, von stromaufwärts nach stromabwärts strömt, wobei die Hauptleitung (100) eine Querschnittsverringerung (100.1) aufweist,
- eine erste Nebenleitung (102), die ein erstes Ende (102.1) aufweist, das stromaufwärts der Querschnittsverringerung (100.1) in die Hauptleitung (100) mündet, ein zweites Ende (102.2), das mit der aufblasbaren Barriere (66) verbunden ist, sowie ein erstes Ventil (102.3), das so eingerichtet ist, dass es einen Durchgangszustand einnimmt, in dem das erste Ventil (102.3) einen Fluss vom ersten Ende (102.1) zum zweiten Ende (102.2) zulässt, und einen Sperrzustand einnimmt, in dem das erste Ventil (102.3) jeden Fluss zwischen dem ersten und dem zweiten Ende (102.1, 102.2) verhindert,
- eine zweite Nebenleitung (104), die ein erstes Ende (104.1)aufweist, das in die Hauptleitung (100) im Bereich der Querschnittsverringerung (100.1) mündet, ein zweites Ende (104.2), das mit der aufblasbaren Barriere (66) verbunden ist, sowie ein zweites Ventil (104.3), das so eingerichtet ist, dass es einen Durchgangszustand einnimmt, in dem das zweite Ventil (104.3) einen Fluss vom zweiten Ende (104.2) zum ersten Ende (104.1) zulässt, und einen Sperrzustand einnimmt, in dem das zweite Ventil (104.3) jeden Fluss zwischen dem ersten und dem zweiten Ende (104.1, 104.2) verhindert.

6. Antriebseinheit für ein Luftfahrzeug nach einem der vorhergehenden Ansprüche, **dadurch gekennzeichnet, dass** das Versorgungssystem (98) eine Kammer umfasst, die ein Fluid enthält, das zum Aufblasen der aufblasbaren Barriere (66) vorgesehen ist und mit der aufblasbaren Barriere (66) in Verbindung steht, sowie einen Kolben, der dazu eingerichtet ist, das Volumen der Kammer zu verändern.

7. Antriebseinheit für ein Luftfahrzeug nach einem der vorhergehenden Ansprüche, **dadurch gekennzeichnet, dass** die Gondel (48) einen vorderen Teil (56) und einen hinteren Teil (58) aufweist, der zwischen einer stromaufwärtigen Position, in der der hintere Teil (58) mit dem vorderen Teil (56) in Kontakt steht, sowie einer stromabwärtigen Position, in der der hintere Teil (58) von dem vorderen Teil (56) beabstandet ist, beweglich ist, wobei die seitliche Öffnung (64) zwischen dem vorderen und dem hinteren Teil (56, 58) angeordnet ist, und dass der hintere Teil (58) wenigstens eine Aufnahme (L58) umfasst, die in Richtung des vorderen Teils (56) offen ist und dazu eingerichtet ist, die aufblasbare Barriere (66) im nicht aufgeblasenen Zustand wenigstens teilweise aufzunehmen.

8. Antriebseinheit für ein Luftfahrzeug nach dem vorhergehenden Anspruch, **dadurch gekennzeichnet, dass** die Schubumkehrvorrichtung (60) wenigstens einen Durchgang (106) aufweist, der es ermöglicht, die Aufnahme (L58) und den ringförmigen Kanal (50) miteinander zu verbinden, wenn sich der hintere Teil (58) in der stromaufwärtigen Position befindet, sowie für jeden Durchgang (106) wenigstens eine Klappe (108) aufweist, die zwischen einer geschlossenen Position, in der die Klappe (108) den Durchgang (106) verschließt, und einer offenen Position, in der die Klappe (108) den Durchgang (106) freigibt, beweglich ist.

9. Antriebseinheit für ein Luftfahrzeug nach dem vorhergehenden Anspruch, **dadurch gekennzeichnet, dass** die Schubumkehrvorrichtung (60) für jede Klappe (108) eine mit der Klappe (108) fest verbundene Verlängerung (114) sowie wenigstens einen mit der festen Struktur (S48) der Gondel (48) fest verbundenen festen Anschlag (116) umfasst, wobei die Verlängerung (114) und der feste Anschlag (116) so angeordnet sind, dass die Klappe (108) bei einer Bewegung des hinteren Teils (58) von der stromabwärtigen Position in die stromaufwärtige Position automatisch in die geschlossene Position umschwenkt.

10. Antriebseinheit für ein Luftfahrzeug nach einem der vorhergehenden Ansprüche, **dadurch gekennzeichnet, dass** die aufblasbare Barriere (66) wenigstens an dem zweiten Rand (74) wenigstens eine Verstärkung aufweist.

11. Antriebseinheit für ein Luftfahrzeug nach einem der vorhergehenden Ansprüche, **dadurch gekennzeichnet, dass** die aufblasbare Barriere (66) wenigstens eine Öffnung (88) aufweist, die sie durchquert und es ermöglicht, im aufgeblasenen Zustand der aufblasbaren Barriere (66) einen Bereich des ringförmigen Kanals (50), der sich stromaufwärts der aufblasbaren Barriere (66) befindet, und einen Bereich des ringförmigen Kanals (50), der sich stromabwärts befindet, miteinander in Verbindung zu bringen.

12. Antriebseinheit für ein Luftfahrzeug nach einem der vorhergehenden Ansprüche, **dadurch gekennzeichnet, dass** die aufblasbare Barriere (66) wenigstens einen nicht aufblasbaren Bereich (78) umfasst, der von einem aufblasbaren Bereich (80) eingerahmt ist.

13. Antriebseinheit für ein Luftfahrzeug nach einem der vorhergehenden Ansprüche, **dadurch gekennzeichnet, dass** die aufblasbare Barriere (66) wenigstens einen ersten aufblasbaren Bereich (82) in Form einer aufblasbaren Platte umfasst, der von einem zweiten aufblasbaren Bereich (84) in Form eines aufblasbaren Wulsts eingerahmt ist.

14. Antriebseinheit für ein Luftfahrzeug nach einem der Ansprüche 1 bis 11, **dadurch gekennzeichnet, dass** die aufblasbare Barriere (66) einen einzelnen aufblasbaren Bereich (86) umfasst, der sich über die gesamte Fläche der aufblasbaren Barriere (66) erstreckt.

## Claims

1. Aircraft propulsion assembly comprising a powering system (46), a nacelle (48) surrounding the powering system (46), an annular duct (50), between the powering system (46) and the nacelle (48) in which, in operation, a flow of air (52) circulates from upstream to downstream, and a thrust-reversing device (60) comprising at least one lateral aperture (64), passing through the nacelle (48) and configured to be in an open state or a closed state, and at least one barrier (66) configured to be in a folded down position in which the barrier (66) does not protrude into the annular duct (50) and a deployed position in which the barrier (66) extends across the annular duct (50) to deflect at least a part of the flow of air (52) circulating in the annular duct (50) toward the lateral aperture (64), the barrier (66) having a first edge (72) secured to the nacelle (48) and a second edge (74) at a distance from the first edge (72) and configured to be in contact with the powering system (46) in deployed position; at least one barrier (66) being inflatable and configured to be in a deflated state, in the folded down position, in which the barrier (66) is flexible, and an inflated state, in deployed position, in which the barrier (66) is substantially rigid or semi-rigid, the thrust-reversing device (60) comprising at least one supply system (98) configured to supply the inflatable barrier (66) with fluid, **characterized in that** the thrust-reversing device (60) comprises at least one holding system (90) configured to hold the inflatable barrier (66) in deployed position and wherein the holding system (90) comprises at least one flexible link (92) having a first end (92.1) linked to the nacelle (48) and a second end (92.2) linked to the second edge (74) of the inflatable barrier (66).

2. Aircraft propulsion assembly as claimed in the preceding claim, wherein the nacelle (48) comprises a front part (56) and a rear part (58) that is movable between an upstream position in which the rear part (58) is in contact with the front part (56) and a downstream position in which the rear part (58) is spaced apart from the front part (56), the lateral aperture (64) being situated between the front and rear parts (56, 58), wherein the flexible link (92) is linked to an attachment point (P) of the rear part (58) and wherein the holding system (90) comprises at least one pulley (94.1) linked to a fixed structure (S48) of the nacelle (48) and configured to guide the flexible link (92), the pulley (94.1) and the attachment point (P) being arranged such that the attachment point (P) is offset upstream with respect to the pulley (94.1) when the rear part (58) is in upstream position and during a part of a movement of the rear part (58) from the upstream position to the downstream position.

3. Aircraft propulsion assembly as claimed in the preceding claim, wherein the holding system (90) comprises first and second pulleys (94.1, 94.2) linked to the fixed structure (S48) of the nacelle (48), the second pulley (94.2) being offset upstream with respect to the first pulley (94.1), the flexible link (92) running, from its first end (92.1), over the first pulley (94.1) then over the second pulley (94.2), and wherein the first and second pulleys (94.1, 94.2) and the attachment point (P) are arranged such that the attachment point (P) is positioned in line with or in proximity to the second pulley (94.2) when the rear part (58) is in upstream position and in line with or in proximity to the first pulley (94.1) when the rear part (58) is in downstream position.

4. Aircraft propulsion assembly as claimed in one of the preceding claims, wherein the supply system (98) comprises an air take-off system on the powering system (46).

5. Propulsion assembly as claimed in one of the preceding claims, wherein the supply system (98) comprises:
- a main duct (100) in which a fluid provided to inflate the inflatable barrier (66) circulates from upstream to downstream, the main duct (100) comprising a section reduction (100.1),
- a first secondary duct (102) having a first end (102.1) emerging in the main duct (100) upstream of the section reduction (100.1), a second end (102.2) linked to the inflatable barrier (66) and a first valve (102.3) configured to be in a passing state in which the first valve (102.3) allows a flow to circulate from the first end (102.1) to the second end (102.2) and a blocked state in which the first valve (102.3) prevents any flow between the first and second ends (102.1, 102.2),
- a second secondary duct (104) having a first end (104.1) emerging in the main duct (100) in line with the section reduction (100.1), a second end (104.2) linked to the inflatable barrier (66) and a second valve (104.3) configured to be in a passing state in which the second valve (104.3) allows a flow to circulate from the second end (104.2) to the first end (104.1) and a blocked state in which the second valve (104.3) prevents any flow between the first and second ends (104.1, 104.2).

6. Aircraft propulsion assembly as claimed in one of the preceding claims, wherein the supply system (98) comprises a chamber containing a fluid provided to inflate the inflatable barrier (66) and connected with the inflatable barrier (66), and a piston configured to modify the volume of the chamber.

7. Aircraft propulsion assembly as claimed in one of the preceding claims, wherein the nacelle (48) comprises a front part (56) and a rear part (58) that is movable between an upstream position in which the rear part (58) is in contact with the front part (56) and a downstream position in which the rear part (58) is spaced apart from the front part (56), the lateral aperture (64) being situated between the front and rear parts (56, 58) and wherein the rear part (58) comprises at least one housing (L58) that is open toward the front part (56) and configured to at least partially house the inflatable barrier (66) in the deflated state.

8. Aircraft propulsion assembly as claimed in the preceding claim, wherein the thrust-reversing device (60) comprises at least one passage (106) making it possible to connect the housing (L58) and the annular duct (50) when the rear part (58) is in the upstream position and, for each passage (106), at least one hatch (108) that is movable between a closed position in which the hatch (108) shuts the passage (106) and an open position in which the hatch (108) frees the passage (106).

9. Aircraft propulsion assembly as claimed in the preceding claim, wherein the thrust-reversing device (60) comprises, for each hatch (108), an extension (114) secured to the hatch (108) and at least one fixed stop (116) secured to the fixed structure (S48) of the nacelle (48), the extension (114) and the fixed stop (116) being arranged such that the hatch (108) swivels automatically into closed position upon a movement of the rear part (58) from the downstream position to the upstream position.

10. Aircraft propulsion assembly as claimed in one of the preceding claims, wherein the inflatable barrier (66) comprises at least one reinforcement at least at the second edge (74).

11. Aircraft propulsion assembly as claimed in one of the preceding claims, wherein the inflatable barrier (66) comprises at least one orifice (88) passing through it and making it possible, when the inflatable barrier (66) is in the inflated state, to connect a zone of the annular duct (50) situated upstream of the inflatable barrier (66) and a zone of the annular duct (50) situated downstream.

12. Aircraft propulsion assembly as claimed in one of the preceding claims, wherein the inflatable barrier (66) comprises at least one non-inflatable zone (78) bracketed by an inflatable zone (80).

13. Aircraft propulsion assembly as claimed in one of the preceding claims, wherein the inflatable barrier (66) comprises at least one first inflatable zone (82) in the form of an inflatable plate bracketed by a second inflatable zone (84) in the form of an inflatable boot.

14. Aircraft propulsion assembly as claimed in one of claims 1 to 11, wherein the inflatable barrier (66) comprises a single inflatable zone (86) which extends over the entire surface area of the inflatable barrier (66).
